(19) **Europäisches Patentamt / European Patent Office / Office européen des brevets**

(11) **EP 2 583 944 A1**

(12) **EUROPEAN PATENT APPLICATION**
published in accordance with Art. 153(4) EPC

(43) Date of publication:
**24.04.2013 Bulletin 2013/17**

(51) Int Cl.:
*C01G 3/00* (2006.01)    *B01D 53/38* (2006.01)
*B01D 53/40* (2006.01)    *B01D 53/81* (2006.01)
*B01J 20/04* (2006.01)    *B01J 20/06* (2006.01)
*B01J 20/30* (2006.01)    *C01G 9/00* (2006.01)
*C01G 53/00* (2006.01)

(21) Application number: **11795583.1**

(22) Date of filing: **31.05.2011**

(86) International application number:
**PCT/JP2011/062874**

(87) International publication number:
**WO 2011/158675 (22.12.2011 Gazette 2011/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.11.2010 JP 2010247245
15.06.2010 JP 2010136148**

(71) Applicant: **Kyowa Chemical Industry Co., Ltd
Takamatsu-shi, Kagawa 761-0113 (JP)**

(72) Inventor: **TACHIFUJI Tomoko
Sakaide-shi
Kagawa 762-0012 (JP)**

(74) Representative: **Raynor, Stuart Andrew
J A Kemp
14 South Square
Gray's Inn
London WC1R 5JJ (GB)**

(54) **COMPOSITE MAGNESIUM HYDROXIDE, METHOD FOR PRODUCING SAME, AND ADSORBENT**

(57) A composite magnesium hydroxide containing a carbonate group and having a large BET specific surface area, a method for producing the same and an adsorbent comprising the same.

The composite magnesium hydroxide is represented by the following formula (1) and has a BET specific surface area of 100 to 400 $m^2/g$.

$$Mg_{1-x}M_x(OH)_{2-y}(CO_3)_{0.5y} \cdot mH_2O \qquad (1)$$

(in the above formula, M is at least one divalent metal ion selected from the group consisting of $Zn^{2+}$, $Cu^{2+}$, $Ni^{2+}$, $Co^{2+}$, $Ca^{2+}$, $Mn^{2+}$, $Fe^{2+}$ and $Ba^{2+}$, and x, y and m satisfy the following conditions:
$0 < x \leq 0.5$
$0.02 \leq y \leq 0.7$
$0 \leq m \leq 1$.)

Fig. 1

EP 2 583 944 A1

**Description**

Field of the Invention

The present invention relates to a composite magnesium hydroxide containing a carbonate ion and having a large BET specific surface area, a method for producing the same and an adsorbent comprising the same.

Description of the Prior Art

Magnesium hydroxide has been known for a long time and is widely used to adsorb (neutralize) an acid substance as it is a solid base. For example, it is used as an antacid in the medical field, as a flue-gas desulfurizing agent or a drainage neutralizer in the industrial field and as an acid soil neutralizer in the agricultural field. For the adsorption (neutralization) of an acid substance, it is desired that magnesium hydroxide should have a large contact area with an acid substance, that is, a large BET specific surface area. As the method for producing magnesium hydroxide, there are known a seawater method in which seawater is reacted with slaked lime and a hydration method in which magnesium oxide is hydrated with decarbonated water. However, the BET specific surface areas of magnesium hydroxide particles synthesized by these methods are not larger than 80 $m^2$/g.

As the method for obtaining a magnesium hydroxide particle having a large BET specific surface area, there is known a method in which a divalent anion for inhibiting the crystal growth of magnesium hydroxide is added in the step of producing magnesium hydroxide. That is, when a magnesium salt solution and an alkali metal hydroxide or ammonia water are reacted with each other in the presence of a carbonate ion, a carbonate group-containing magnesium hydroxide containing a carbonate group and having a BET specific surface area of 80 $m^2$/g or more is obtained (Patent Document 1) . This carbonate group-containing magnesium hydroxide is an extremely effective acid gas adsorbent as it reacts with hydrogen chloride gas, SOx gas and acetic acid-based gas instantaneously. However, it is not so effective for hydrogen sulfide gas and methyl mercaptan.

(Patent Document 1) WO2008/123566

Summary of the Invention

It is therefore an object of the present invention to provide a composite magnesium hydroxide having excellent adsorption performance for not only hydrogen chloride gas, SOx gas and acetic acid-based gas but also hydrogen sulfide gas and methyl mercaptan and a large BET specific surface area as well as a method for producing the same. It is another object of the present invention to provide an adsorbent comprising this composite magnesium hydroxide.

The inventors of the present invention conducted intensive studies to improve the above problem and found that a composite magnesium hydroxide having excellent adsorption performance for hydrogen sulfide and methyl mercaptan is obtained by supporting a metal hydroxide such as Cu or Zn on the surface of a magnesium hydroxide particle containing a carbonate group and having a large BET specific surface area. The present invention was accomplished based on this finding.

Brief Description of the Drawings

Fig. 1 shows X-ray diffraction images of the composite magnesium hydroxide compounds of the present invention; and
Fig. 2 shows a SEM photo of the composite magnesium hydroxide compound of the present invention which was granulated by spray drying.

Best Mode for Carrying out the Invention

<composite magnesium hydroxide>

The composite magnesium hydroxide of the present invention is represented by the following formula (1).
$$Mg_{1-x}M_x(OH)_{2-y}(CO_3)_{0.5y} \cdot mH_2O \quad (1)$$
In the above formula, M is at least one divalent metal ion selected from the group consisting of $Zn^{2+}$, $Cu^{2+}$, $Ni^{2+}$, $CO^{2+}$, $Ca^{2+}$, $Mn^{2+}$, $Fe^{2+}$ and $Ba^{2+}$.
The metal ion can be selected according to a substance to be adsorbed. For example, when hydrogen sulfide gas is to be adsorbed, it is preferred to compound $Cu^{2+}$, $Ni^{2+}$ or $Zn^{2+}$. Especially $Cu^{2+}$ and $Ni^{2+}$ have a high hydrogen sulfide gas adsorption speed and excellent stability.

In the above formula, x satisfies $0 < x \leqq 0.5$, preferably $0 < x \leqq 0.2$, more preferably $0 < x \leqq 0.1$.

In the above formula, y satisfies $0.02 \leqq y \leqq 0.7$, preferably $0.04 \leqq y \leqq 0.6$, more preferably $0.1 \leqq y \leqq 0.4$.

In the above formula, m satisfies $0 \leqq m \leqq 1$, preferably $0 \leqq m \leqq 0.6$, more preferably $0 \leqq m \leqq 0.4$.

The composite magnesium hydroxide of the present invention has a BET specific surface area of 100 to 400 $m^2/g$, preferably 120 to 350 $m^2/g$, more preferably 150 to 300 $m^2/g$.

<baked product>

The present invention includes a baked product obtained by baking the above composite magnesium hydroxide at 350°C or higher.

<production method (1)>

The composite magnesium hydroxide of the present invention can be manufactured by adding and mixing an aqueous solution of a salt of at least one divalent metal selected from the group consisting of $Zn^{2+}$, $Cu^{2+}$, $Ni^{2+}$, $Co^{2+}$, $Ca^{2+}$, $Mn^{2+}$, $Fe^{2+}$ and $Ba^{2+}$ with a slurry of a carbonate group-containing magnesium hydroxide having a BET specific surface area of 100 $m^2/g$ or more to support a divalent metal hydroxide on the surface of the carbonate group-containing magnesium hydroxide.

(carbonate group-containing magnesium hydroxide)

The composite magnesium hydroxide of the present invention is obtained from a slurry of a carbonate group-containing magnesium hydroxide having a BET specific surface area of 100 $m^2/g$ or more (may be referred to as "raw material slurry" hereinafter).

The raw material slurry can be manufactured by reacting a water-soluble magnesium salt with an alkali metal hydroxide or ammonia water in water in the presence of a carbonate.

Examples of the water-soluble magnesium salt include magnesium sulfate, magnesium chloride, magnesium nitrate and magnesium acetate.

Examples of the alkali metal hydroxide include sodium hydroxide and potassium hydroxide. Ammonia water may be used in place of the alkali metal hydroxide.

Examples of the carbonate include sodium carbonate, sodium bicarbonate, potassium carbonate, potassium bicarbonate and ammonium carbonate.

The reaction temperature is preferably 5 to 60°C. The reaction time is preferably 3 to 180 minutes. Washing is preferably carried out by passing water which is 5 to 50 times the weight of the solid content or by emulsification. The drying temperature is preferably 90 to 350°C.

The crystal growth of magnesium hydroxide is inhibited by reacting the water-soluble magnesium salt with the alkali metal hydroxide or ammonia water in the presence of the carbonate, thereby making it possible to obtain the carbonate group-containing magnesium hydroxide having a large BET specific surface area.

(divalent metal salt)

The divalent metal is at least one selected from the group consisting of $Zn^{2+}$, $Cu^{2+}$, $Ni^{2+}$, $Co^{2+}$, $Ca^{2+}$, $Mn^{2+}$, $Fe^{2+}$ and $Ba^{2+}$. Salts thereof include chlorides, sulfates, nitrates and acetates. Specific examples thereof include zinc chloride, zinc sulfate, zinc nitrate, zinc acetate, copper chloride, copper sulfate, copper nitrate, copper acetate and nickel chloride.

The divalent metal can be supported by adding and mixing an aqueous solution of the divalent metal salt to a slurry of the carbonate group-containing magnesium hydroxide.

The supporting temperature is preferably 5 to 60°C. The supporting time is preferably 5 to 120 minutes.

Thus, when the carbonate group-containing magnesium hydroxide having a large BET specific surface area is prepared and an aqueous solution of a salt of a divalent metal such as Zn or Cu is added to a slurry of the carbonate group-containing magnesium hydroxide, many types of composite magnesium hydroxides can be easily synthesized according to purpose and the divalent metal ion to be compounded is eccentrically located on the surface of each particle, thereby making it easy to obtain the effect of the divalent metal ion with a small amount thereof.

<production method (2)>

The composite magnesium hydroxide of the present invention can be manufactured by contacting an Mg ion, at least one divalent metal ion selected from the group consisting of $Zn^{2+}$, $Cu^{2+}$, $Ni^{2+}$, $Co^{2+}$, $Ca^{2+}$, $Mn^{2+}$, $Fe^{2+}$ and $Ba^{2+}$, and an OH ion to one another in water in the presence of a $CO_3$ ion.

The composite magnesium hydroxide of the present invention can also be synthesized by reacting a mixed metal salt aqueous solution containing a magnesium salt and another metal salt such as a Zn or Cu salt with an alkali substance in the presence of a $CO_3$ ion. However, when magnesium hydroxide is used as an adsorbent, the composite magnesium hydroxide is preferably synthesized by precipitating a metal hydroxide such as Cu or Zn hydroxide on the surface of a magnesium hydroxide particle because the effect of Cu or Zn can be obtained with a small amount of the metal advantageously. However, since an aqueous solution of Cu or Zn has mild acidity, when the production method (1) is employed, the BET specific surface area decreases slightly as compared with that before support. The production method (2) does not have this problem.

The reaction method is the same as the method for producing the raw material slurry described in the production method (1) except that an aqueous solution of a water-soluble magnesium salt is changed to an aqueous solution obtained by mixing together a water-soluble magnesium salt and an aqueous solution of a water-soluble salt of divalent metal such as a Zn or Cu.

<adsorbent>

The present invention includes an adsorbent comprising the above composite magnesium hydroxide. The adsorbent preferably comprises a granulated product obtained by granulating the composite magnesium hydroxide to a particle diameter of 0.05 to 20 mm. When the adsorbent is filled into a column and an acid gas is circulated into the column, a spray granulated product or an extrusion granulated product is excellent in terms of air permeability and gas contact ability.

The adsorbent is preferably used to adsorb an acid gas. The adsorbent is preferably used to adsorb an acid substance contained in an organic solvent. The adsorbent is preferably used for deodorization.

The present invention includes a chemical filter containing the above composite magnesium hydroxide.

To adsorb a hydrogen sulfide gas or methyl mercaptan, X in the formula (1) of the composite magnesium hydroxide is preferably 0.001 or more, more preferably 0.01 or more.

Examples

The following examples are provided to further illustrate the present invention.

Example 1

(raw material slurry)

12 liters of a 1.5 mol/L magnesium sulfate aqueous solution and 11.4 liters of an alkali mixed solution of caustic soda and sodium carbonate having a total alkali concentration of 3.0 N ($2NaOH : Na_2CO_3 = 90:10$) were subjected to a continuous pouring addition reaction at room temperature under agitation for a residence time of 10 minutes. About 23.4 liters of the obtained reaction slurry was filtered, washed by passing through 21 liters of water, dehydrated and dried at 105°C with a shelf-type drier for 18 hours. The dried product was ground in a mortar and let pass through a metal net having an opening of 150 $\mu$m to obtain 1,040 g of a white powder having a BET specific surface area of 260 $m^2$/g and represented by the following formula. $Mg(OH)_{1.80}(CO_3)_{0.10} \cdot 0.10H_2O$

(support of divalent metal)

500 ml of water was added to 50 g of this white powder, and 43.2 ml of a 1.0 mol/L zinc chloride aqueous solution was added to the resulting suspension under agitation and kept stirred at room temperature for 30 minutes. The obtained reaction slurry was filtered, washed by passing through 1 liter of water, dehydrated and dried at 105 °C with a shelf-type drier for 18 hours. The dried product was ground in a mortar and let pass through a metal net having an opening of 150 $\mu$m to obtain 48.9 g of a white powder having a BET specific surface area of 206 $m^2$/g and represented by the following formula.

$Mg_{0.95}Zn_{0.05}(OH)_{1.76}(CO_3)_{0.12} \cdot 0.11H_2O$

Example 2

(raw material slurry)

12 liters of a 1.5 mol/L magnesium sulfate aqueous solution and 11.4 liters of an alkali mixed solution of caustic soda and sodium carbonate having a total alkali concentration of 3.0 N (2NaOH: $Na_2CO_3$ = 90:10) were subjected to a continuous pouring addition reaction at room temperature under agitation for a residence time of 10 minutes. About 23.4 liters of the obtained reaction slurry was filtered, washed by passing through 21 liters of water, dehydrated and dried at 1.05 °C with a shelf-type drier for 18 hours. The dried product was ground in a mortar and let pass through a metal net having an opening of 150 $\mu$m to obtain 1,040 g of a white powder having a BET specific surface area of 260 $m^2$/g and represented by the following formula. Mg $(OH)_{1.80}(CO_3)_{0.10} \cdot 0.10H_2O$

(support of divalent metal)

500 ml of water was added to 50 g of this white powder, and 43.2 ml of a 1.0 mol/L copper sulfate, aqueous solution was added to the resulting suspension under agitation and kept stirred at room temperature for 30 minutes. The obtained reaction slurry was filtered, washed by passing through 1 liter of water, dehydrated and dried at 105°C with a shelf-type drier for 18 hours. The dried product was ground in a mortar and let pass through a metal net having an opening of 150 $\mu$m to obtain 49.3 g of an aqua powder having a BET specific surface area of 214 $m^2$/g and represented by the following formula.
$Mg_{0.95}Cu_{0.05}(OH)_{1.80}(CO_3)0.10 \cdot 0.14H_2O$

Example 3

(raw material slurry)

12 liters of a 1.5 mol/L magnesium sulfate aqueous solution and 11.4 liters of an alkali mixed solution of caustic soda and sodium carbonate having a total alkali concentration of 3.0 N(2NaOH: $Na_2CO_3$ = 90:10) were subjected to a continuous pouring addition reaction at room temperature under agitation for a residence time of 10 minutes. About 23.4 liters of the obtained reaction slurry was filtered, washed by passing through 21 liters of water, dehydrated and dried at 105°C with a shelf-type drier for 18 hours. The dried product was ground in a mortar and let pass through a metal net having an opening of 150 $\mu$m to obtain 1,040 g of a white powder having a BET specific surface area of 260 $m^2$/g and represented by the following formula. Mg $(OH)_{1.80}(CO_3)_{0.10} \cdot 0.10H_2O$

(support of divalent metal)

500 ml of water was added to 50 g of this white powder, and 43.2 ml of a 1.0 mol/L nickel chloride aqueous solution was added to the resulting suspension under agitation and kept stirred at room temperature for 30 minutes. The obtained reaction slurry was filtered, washed by passing through 1 liter of water, dehydrated and dried at 105°C with a shelf-type drier for 18 hours. The dried product was ground in a mortar and let pass through a metal net having an opening of 150 $\mu$m to obtain 48.5 g of a pale-green powder having a BET specific surface area of 225 $m^2$/g and represented by the following formula.
$Mg_{0.94}Ni_{0.06}(OH)_{1.80}(CO_3)_{0.10} \cdot 0.16H_2O$

Example 4

(raw material slurry)

12 liters of a 1.5 mol/L magnesium sulfate aqueous solution and 11.4 liters of an alkali mixed solution of caustic soda and sodium carbonate having a total alkali concentration of 3.0 N (2NaOH: $Na_2CO_3$ = 90:10) were subjected to a continuous pouring addition reaction at room temperature under agitation for a residence time of 10 minutes. About 23.4 liters of the obtained reaction slurry was filtered, washed by passing through 21 liters of water and emulsified with water to obtain 10 liters of an emulsion. This was dried with a spray drier to obtain 950 g of a white spray granulated powder having a BET specific surface area of 263 $m^2$/g and represented by the following formula. Mg $(OH)_{1.80}(CO_3)_{0.10} \cdot 0.18H_2O$

(support of divalent metal)

500 ml of water was added to 50 g of this white spray granulated powder, and 43.2 ml of a 1.0 mol/L zinc chloride aqueous solution was added to the resulting suspension under agitation and kept stirred at room temperature for 30 minutes. The obtained reaction slurry was filtered, washed by passing through 1 liter of water, dehydrated and dried at 105°C with a shelf-type drier for 18 hours. The dried product was let pass through a metal net having an opening of 500 $\mu$m to obtain 48.0 g of a white powder having a BET specific surface area of 180 m$^2$/g and represented by the following formula.

$Mg_{0.94}Zn_{0.06}(OH)_{1.78}(CO_3)_{0.11} \cdot 0.12H_2O$

Example 5

(raw material slurry)

12 liters of a 1.5 mol/L magnesium sulfate aqueous solution and 11.4 liters of an alkali mixed solution of caustic soda and sodium carbonate having a total alkali concentration of 3.0 N (2NaOH: $Na_2CO_3$ = 90:10) were subjected to a continuous pouring addition reaction at room temperature under agitation for a residence time of 10 minutes. About 23.4 liters of the obtained reaction slurry was filtered, washed by passing through 21 liters of water and emulsified with water to obtain 10 liters of an emulsion. This was dried with a spray drier to obtain 950 g of a white spray granulated powder having a BET specific surface area of 263 m$^2$/g and represented by the following formula. $Mg(OH)_{1.80}(CO_3)_{0.10} \cdot 0.18H_2O$

(support of divalent metal)

500 ml of water was added to 50 g of this white spray granulated powder, and 43.2 ml of a 1.0 mol/L copper sulfate aqueous solution was added to the resulting suspension under agitation and kept stirred at room temperature for 30 minutes. The obtained reaction slurry was filtered, washed by passing through 1 liter of water, dehydrated and dried at 105°C with a shelf-type drier for 18 hours. The dried product was let pass through a metal net having an opening of 500 $\mu$m to obtain 48.5 g of an aqua powder having a BET specific surface area of 209 m$^2$/g and represented by the following formula.

$Mg_{0.94}Cu_{0.06}(OH)_{1.82}(CO_3)_{0.09} \cdot 0.12H_2O$

Comparative Example 1

Calcium hydroxide which is a special grade reagent was used. The BET specific surface area thereof was 13.2 m$^2$/g.

Comparative Example 2

The KISUMA 5 magnesium hydroxide of Kyowa Chemical Industry Co., Ltd. was used. The BET specific surface area thereof was 5.9 m$^2$/g.

Comparative Example 3

The Kyowa Suimag F magnesium hydroxide of Kyowa Chemical Industry Co., Ltd. was used. The BET specific surface area thereof was 57.6 m$^2$/g.

Comparative Example 4

12 liters of a 1.5 mol/L magnesium sulfate aqueous solution and 11.4 liters of an alkali mixed solution of caustic soda and sodium carbonate having a total alkali concentration of 3.0 N (2NaOH: $Na_2CO_3$ = 90:10) were subjected to a continuous pouring addition reaction at room temperature under agitation for a residence time of 10 minutes. About 23.4 liters of the obtained reaction slurry was filtered, washed by passing through 21 liters of water, dehydrated and dried at 105°C with a shelf-type drier for 18 hours. The dried product was ground in a mortar and let pass through a metal net having an opening of 150 $\mu$m to obtain 1,040 g of a white powder having a BET specific surface area of 260 m$^2$/g and represented by the following formula.

$Mg(OH)_{1.80}(CO_3)_{0.10} \cdot 0.10H_2O$

Comparative Example 5

12 liters of a 1.5 mol/L magnesium sulfate aqueous solution and 11.4 liters of an alkali mixed solution of caustic soda and sodium carbonate having a total alkali concentration of 3.0 N (2NaOH: $Na_2CO_3$ = 90:10) were subjected to a continuous pouring addition reaction at room temperature under agitation for a residence time of 10 minutes. About 23.4 liters of the obtained reaction slurry was filtered, washed by passing through 21 liters of water and emulsified with water to obtain 10 liters of an emulsion. This was dried with a spray drier to obtain 950 g of a white spray granulated powder having a BET specific surface area of 263 $m^2$/g and represented by the following formula.

$Mg(OH)_{1\cdot 80}(CO_3)_{0\cdot 10}\cdot 0.18H_2O$

The above Examples 1 to 5 and the above Comparative Examples 1 to 5 were analyzed by the following methods.

(1) Magnesium (Mg), zinc (Zn), copper (cu) and nickel (Ni); chelate titration method
(2) Carbonic acid ($CO_2$) ; JIS R9101 sodium hydroxide solution-hydrochloric acid titration method
(3) Dry weight loss ($H_2O$); Japanese Pharmaceutical Codex, dry weight loss
(4) BET specific surface area; liquid nitrogen adsorption apparatus (NOVA2000 of Yuasa Ionics Co., Ltd.)
(5) X-ray structural analysis; automatic X-ray diffraction apparatus (RINT2200V of Rigaku Corporation)
(6) Granulated particle appearance; scanning electron microscope (SEM) (S-3000N of Hitachi, Ltd.)

The measurement results of composition analysis and BET specific surface area are shown in Table 1.

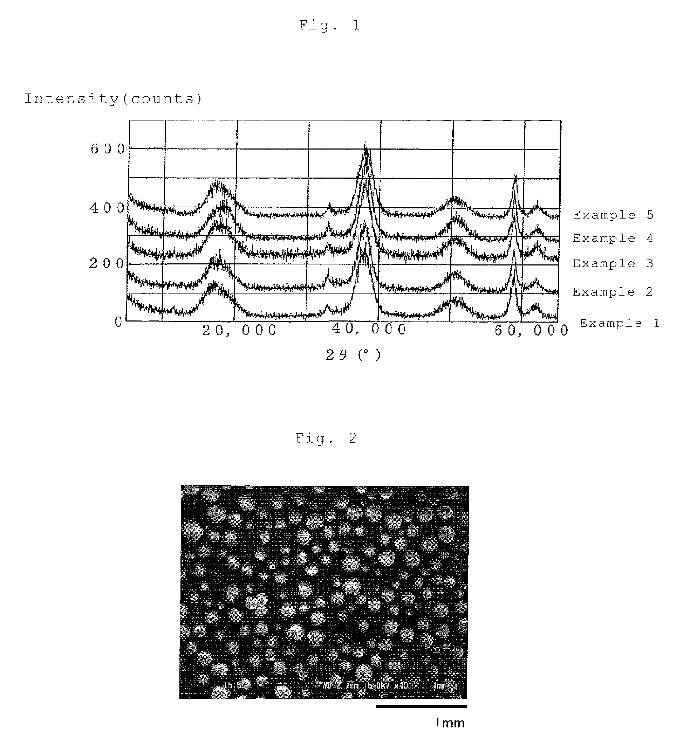

Fig. 1 shows X-ray diffraction images of composite magnesium hydroxide compounds obtained in Examples 1 to 5. The X-ray diffraction patterns show that the particles obtained in Examples 1 to 5 are all magnesium hydroxide. Fig. 2 shows an SEM photo of the spray granulated product of Example 5. It is understood from Fig. 2 that the carbonate group-containing composite magnesium hydroxide of the present invention has excellent granulation properties so that it can be easily granulated into a product of intended size by a spray drier or an extrusion granulator.

Table 1

|  | Mg (wt%) | Zn (wt%) | Cu (wt%) | Ni (wt%) | $CO_2$ (wt%) | $H_2O$ (wt%) | BET ($m^2$/g) |
|---|---|---|---|---|---|---|---|
| Example 1 | 34.48 | 5.36 | - | - | 7.70 | 2.88 | 206 |
| Example 2 | 34.11 | - | 5.17 | - | 6.49 | 3.72 | 214 |
| Example 3 | 33.62 | - | - | 4.97 | 6.45 | 4.13 | 225 |
| Example 4 | 33.99 | 6.13 | - | - | 6.99 | 3.20 | 180 |
| Example 5 | 33.96 | - | 5.94 | - | 6.15 | 3.20 | 209 |
| Comparative Example 1 | - | - | - | - | 0.77 | 0.00 | 13.2 |
| Comparative Example 2 | 41.67 | - | - | - | 0.18 | 0.10 | 5.9 |
| Comparative Example 3 | 40.86 | - | - | - | 0.72 | 0.76 | 57.6 |
| Comparative Example 4 | 38.09 | - | - | - | 6.74 | 2.76 | 260 |
| Comparative Example 5 | 35.87 | - | - | - | 6.23 | 4.66 | 263 |

Acid gas adsorption tests were conducted on the above Examples 1 to 5 and the above Comparative Examples 1 to 5 by the following methods. The results of the acid gas adsorption tests are shown in Tables 2 to 4.

(1) Hydrogen chloride gas adsorption breakthrough test

0.5 g of a powder sample was filled into a glass column having an inner diameter of 14 mm together with glass wool. 94.1 ppm of a hydrogen chloride gas was flown into this column at a rate of 0. 44 L/min to measure the concentration at the exit of the column with a detection tube. The breakthrough time was a time when the concentration at the exit of the column exceeded a supply concentration of 0.5 % (0.5 ppm).

(2) SOx gas adsorption breakthrough test

0.5 g of a powder sample was filled into a glass column having an inner diameter of 14 mm together with glass wool. 136 ppm of an $SO_2$ gas was flown into this column at a rate of 0.44 L/min to measure the concentration at the exit of the column with a detection tube. The breakthrough time was a time when the concentration at the exit of the column exceeded a supply concentration of 0.5 % (0.7 ppm).

(3) hydrogen sulfide gas adsorption test

30 mg of a powder sample was put into a 1-liter tedler bag, air was removed from the bag, and 99.1 ppm of a hydrogen sulfide standard gas was filled into the bag to measure the concentration of the hydrogen sulfide gas in the tedler bag along with time by using the GC-14B gas chromatography of Shimadzu Corporation (equipped with an FPD detector). The β, β'-oxydipropionitrile 25% was used as the packing column. As for a sample having a hydrogen sulfide removal rate of 100 % within 180 minutes of adsorption, the gas in the tedler bag was removed, and 99.1 ppm of a hydrogen sulfide standard gas was filled into the bag to carry out the measurement again.

```
Hydrogen sulfide removal rate (%) = (gas
concentration before adsorption - gas concentration
after adsorption)/gas concentration before adsorption
x 100
```

Table 2

| | Concentration of hydrogen chloride gas at exit of column (ppm) | | | | | | | |
|---|---|---|---|---|---|---|---|---|
| | Ex. 1 | Ex. 2 | Ex. 4 | Ex. 5 | C.Ex.1 | C.Ex.3 | C.Ex.4 | C.Ex.5 |
| Circulation time 5 minutes | 0 | 0 | 0 | 0 | 0 | 0 | 0 | 0 |
| 10 minutes | 0 | 0 | 0 | 0 | 1.5 | 1.2 | 0 | 0 |
| 20 minutes | 0 | 0 | 0 | 0 | - | - | 0 | 0 |
| 30 minutes | 0 | 0 | 0 | 0 | - | - | 0 | 0 |
| 40 minutes | 1 | 0.4 | 0 | 0 | - | - | 3 | 0 |
| 50 minutes | - | 1.8 | 0 | 0 | - | - | - | 0 |
| 60 minutes | - | - | 0 | 0 | - | - | - | 0 |
| 70 minutes | - | - | 0 | 0 | - | - | - | 0 |
| 80 minutes | - | - | 0 | 0 | - | - | - | 0 |
| 90 minutes | - | - | 0 | 0 | - | - | - | 0 |
| 100 minutes | - | - | 0 | 0 | - | - | - | 0 |
| 110 minutes | - | - | 0 | 0 | - | - | - | 0 |
| 120 minutes | - | - | 0 | 0 | - | - | - | 0 |
| Breakthrough time (minutes) | 40 | 50 | 120< | 120< | 10 | 10 | 40 | 120< |

Table 3

| | Concentration of SO$_2$ gas at exit of column (ppm) | | | | |
|---|---|---|---|---|---|
| | Example 4 | Example 5 | Comparative Example 1 | Comparative Example 3 | Comparative Example 5 |
| Circulation time 5 minutes | 0 | 0 | 20 | 17.5 | 0 |
| 10 minutes | 0 | 0 | - | - | 0 |
| 20 minutes | 0 | 0 | - | - | 0 |
| 30 minutes | 0 | 0 | - | - | 0 |
| 40 minutes | 0 | 0 | - | - | 0 |
| 50 minutes | 0 | 0 | - | - | 0 |
| 60 minutes | 0 | 0 | - | - | 0 |
| 70 minutes | 0 | 0 | - | - | 0 |
| 80 minutes | 0 | 0 | - | - | 0 |
| 90 minutes | 0 | 0 | - | - | 0 |
| 100 minutes | 0 | 0.5 | - | - | 0 |
| 110 minutes | 1.25 | 3.75 | - | - | or |
| 120 minutes | - | - | - | - | 1.25 |
| Breakthrough time (minutes) | 110 | 110 | 5> | 5> | 120 |

Table 4

| | | Hydrogen sulfide removal rate(%) | | | | | | | | |
|---|---|---|---|---|---|---|---|---|---|---|
| Adsorption time(minutes) | | 1 | 10 | 20 | 30 | 40 | 50 | 60 | 120 | 180 |
| Example 1 | First time | 44.83 | 88.19 | 96.39 | 97.91 | 98.68 | 99.07 | 99.33 | 99.91 | 100.00 |
| | Second time | 36.03 | 68.23 | 73.83 | 76.80 | 78.39 | 80.81 | 82.44 | 89.19 | 92.35 |
| Example 2 | First time | 45.54 | 99.84 | 100.00 | 100.00 | 100.00 | 100.00 | 100.00 | 100.00 | 100.00 |
| | Second time | 38.83 | 91.53 | 99.40 | 100.00 | 100.00 | 100.00 | 100.00 | 100.00 | 100.00 |
| Example 3 | First time | 24.26 | 61.02 | 96.82 | 100.00 | 100.00 | 100.00 | 100.00 | 100.00 | 100.00 |
| | Second time | 26.09 | 67.53 | 100.00 | 100.00 | 100.00 | 100.00 | 100.00 | 100.00 | 100.00 |
| Comparative Example 1 | First time | 9.34 | 14.49 | 14.67 | 15.92 | 16.43 | 17.16 | 17.34 | 21.51 | 23.12 |
| Comparative Example 2 | First time | 0.00 | 0.00 | 0.00 | 1.56 | 4.24 | 5.02 | 6.00 | 12.99 | 14.53 |
| Comparative Example 3 | First time | 1.00 | 1.26 | 4.75 | 5.20 | 6. 68 | 8.45 | 8.67 | 17.05 | 18.81 |

(continued)

| Adsorption time(minutes) | | Hydrogen sulfide removal rate(%) | | | | | | | | |
|---|---|---|---|---|---|---|---|---|---|---|
| | | 1 | 10 | 20 | 30 | 40 | 50 | 60 | 120 | 180 |
| Comparative Example 4 | First time | 17.19 | 17.39 | 17.46 | 17.57 | 19.62 | 20.26 | 26.52 | 33.83 | 34.63 |

The composite magnesium hydroxides having a large BET specific surface area of Examples 1 to 5 had a higher adsorption rate for all the acid gases used in the tests than those of the ordinary calcium hydroxide and magnesium hydroxide of Comparative Examples 1 to 3. Although the carbonate group-containing magnesium hydroxides having a large BET specific surface area of Comparative Examples 4 and 5 had high adsorptivity for hydrogen chloride gas and SOx gas, they had much lower adsorptivity for hydrogen sulfide gas than those of Examples 1 to 5 in which Zn, Cu or Ni was compounded.

Effect of the Invention

The composite magnesium hydroxide of the present invention has an extremely large BET specific surface area. The composite magnesium hydroxide of the present invention has excellent adsorptivity for not only hydrogen chloride gas, SOx gas and acetic acid-based gas but also hydrogen sulfide gas and methyl mercaptan. Since a divalent metal such as zinc or copper is eccentrically located on the surface of magnesium hydroxide in the composite magnesium hydroxide of the present invention, the effect of compounding can be obtained by supporting a small amount of the divalent metal.

According to the production method of the present invention, a carbonate group-containing magnesium hydroxide having a large BET specific surface area is first synthesized and then an aqueous solution of a salt of a metal to be compounded is added to the carbonate group-containing magnesium hydroxide, thereby making it possible to easily obtain a composite magnesium hydroxide having a large BET specific surface area.

The composite magnesium hydroxide of the present invention may be also synthesized by reacting a mixed metal salt aqueous solution containing a magnesium salt and another metal salt such as a Zn or Cu salt with an alkali substance in the presence of a $CO_3$ ion. With this method, a composite magnesium hydroxide containing a divalent metal such as zinc or copper uniformly dispersed therein and having a large BET specific surface area can be obtained and the reduction of the BET specific surface area by compounding can be prevented. When the production method is changed according to purpose, the distribution of the compounded metal can be selected.

The adsorbent of the present invention has excellent adsorptivity for not only hydrogen chloride gas, SOx gas and acetic acid-based gas but also hydrogen sulfide gas and methyl mercaptan.

Industrial Feasibility

Since the composite magnesium hydroxide of the present invention has a high reaction rate with an acid substance, it is useful as an acid substance adsorbent neutralizer having an immediate effect. It can be expected to be used in a wide variety of fields such as fillers, ceramic raw materials, food additives and antacids.

**Claims**

1. A composite magnesium hydroxide represented by the following formula (1) and having a BET specific surface area of 100 to 400 m$^2$/g.

$$Mg_{1-x}M_x(OH)_{2-y}(CO3)_{0 \cdot 5y} \cdot mH_2O \quad (1)$$

(in the above formula, M is at least one divalent metal ion selected from the group consisting of $Zn^{2+}$, $Cu^{2+}$, $Ni^{2+}$, $Co^{2+}$, $Ca^{2+}$, $Mn^{2+}$, $Fe^{2+}$ and $Ba^{2+}$, and x, y and m satisfy the following conditions:
$0 < x \leqq 0.5$
$0.02 \leqq y \leqq 0.7$
$0 \leqq m \leqq 1$.)

2. The composite magnesium hydroxide according to claim 1, wherein M is at least one divalent metal ion selected from the group consisting of $Zn^{2+}$, $Cu^{2+}$ and $Ni^{2+}$ in the formula (1).

3. The composite magnesium hydroxide according to claim 1 which has a BET specific surface area of 120 to 350 $m^2/g$.

4. The composite magnesium hydroxide according to claim 1, wherein x satisfies $0 < x \leqq 0.2$.

5. The composite magnesium hydroxide according to claim 1, wherein y satisfies $0.04 \leqq y \leqq 0.6$.

6. A baked product obtained by baking the composite magnesium hydroxide of claim 1 at 350°C or higher.

7. A method for producing the composite magnesium hydroxide of claim 1, comprising the step of:

adding and mixing an aqueous solution of a salt of at least one divalent metal selected from the group consisting of $Zn^{2+}$, $Cu^{2+}$, $Ni^{2+}$, $Co^{2+}$, $Ca^{2+}$, $Mn^{2+}$, $Fe^{2+}$ and $Ba^{2+}$ with a slurry of a carbonate group-containing magnesium hydroxide having a BET specific surface area of 100 $m^2/g$ or more to support a divalent metal hydroxide on the surface of magnesium hydroxide.

8. The method for producing the composite magnesium hydroxide of claim 1, wherein a Mg ion, at least one divalent metal ion selected from the group consisting of $Zn^{2+}$, $Cu^{2+}$, $Ni^{2+}$, $Co^{2+}$, $Ca^{2+}$, $Mn^{2+}$, $Fe^{2+}$ and $Ba^{2+}$, and an OH ion are contacted to one another in water in the presence of a $CO_3$ ion.

9. An adsorbent comprising the composite magnesium hydroxide of any one of claims 1 to 5.

10. The adsorbent according to claim 9 which is prepared by granulating a composite magnesium hydroxide to a particle diameter of 0.05 to 20 mm.

11. A chemical filter comprising the adsorbent of claim 9 or 10.

12. The adsorbent according to claim 9 or 10 which is used to adsorb or deodorize an acid gas or an acid substance contained in an organic solvent.

Fig. 1

Intensity(counts)

$2\theta$ (°)

Fig. 2

1mm

## INTERNATIONAL SEARCH REPORT

| International application No. |
| --- |
| PCT/JP2011/062874 |

**A. CLASSIFICATION OF SUBJECT MATTER**
*C01G3/00*(2006.01)i, *B01D53/38*(2006.01)i, *B01D53/40*(2006.01)i, *B01D53/81* (2006.01)i, *B01J20/04*(2006.01)i, *B01J20/06*(2006.01)i, *B01J20/30*(2006.01)i, *C01G9/00*(2006.01)i, *C01G53/00*(2006.01)i
According to International Patent Classification (IPC) or to both national classification and IPC

**B. FIELDS SEARCHED**

Minimum documentation searched (classification system followed by classification symbols)
C01F11/00-11/48, C01G3/00-3/14, C01G9/00-9/08, C01G45/00-45/12, C01G49/00-53/12

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)
CA/REGISTRY(STN)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 2004-528965 A (Water Visions International, Inc.),<br>24 September 2004 (24.09.2004),<br>paragraph [0050]<br>& US 2004/0159605 A1 & EP 1370338 A<br>& WO 2002/076577 A2 | 1-3,5<br>4,6-12 |
| X<br>A | WO 2009/057796 A1 (Kyowa Chemical Industry Co., Ltd.),<br>07 May 2009 (07.05.2009),<br>claims 1, 2, 4, 5<br>& US 2010/0260852 A1 & EP 2204178 A1 | 6<br>1-5,7-12 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>08 August, 2011 (08.08.11) | Date of mailing of the international search report<br>16 August, 2011 (16.08.11) |
| --- | --- |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| | International application No. |
|---|---|
| | PCT/JP2011/062874 |

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2008/123566 A1  (Kyowa Chemical Industry Co., Ltd.),<br>16 October 2008 (16.10.2008),<br>claims 1 to 5<br>& US 2010/0098781 A1     & EP 2135845 A1 | 1-12 |
| A | JP 11-180808 A  (Kyowa Chemical Industry Co., Ltd.),<br>06 July 1999 (06.07.1999),<br>claim 1<br>& US 6297193 B1         & EP 970612 A1<br>& WO 1999/030564 A1 | 1-12 |

Form PCT/ISA/210 (continuation of second sheet) (July 2009)

**INTERNATIONAL SEARCH REPORT**

International application No.

PCT/JP2011/062874

**Box No. II**      **Observations where certain claims were found unsearchable (Continuation of item 2 of first sheet)**

This international search report has not been established in respect of certain claims under Article 17(2)(a) for the following reasons:

1. ☐ Claims Nos.:
     because they relate to subject matter not required to be searched by this Authority, namely:

2. ☐ Claims Nos.:
     because they relate to parts of the international application that do not comply with the prescribed requirements to such an extent that no meaningful international search can be carried out, specifically:

3. ☐ Claims Nos.:
     because they are dependent claims and are not drafted in accordance with the second and third sentences of Rule 6.4(a).

**Box No. III**      **Observations where unity of invention is lacking (Continuation of item 3 of first sheet)**

This International Searching Authority found multiple inventions in this international application, as follows:
     The invention in claim 1 does not have novelty and a special technical feature since the invention is described in the following document 1, and consequently, the invention in claim 1 does not comply with the requirement of unity.
     The inventions in claims indicated below are relevant to main invention.
     Claims 1, 2, 9, 10, 11
     Document 1: JP 2004-528965 A

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

     ☐ The additional search fees were accompanied by the applicant's protest but the applicable protest fee was not paid within the time limit specified in the invitation.

     ☐ No protest accompanied the payment of additional search fees.

Form PCT/ISA/210 (continuation of first sheet (2)) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2008123566 A